(19) Europäisches Patentamt
European Patent Office
Office européen des brevets

(11) Publication number: **0 661 344 A1**

(12) **EUROPEAN PATENT APPLICATION**

(21) Application number: **94120578.3**

(51) Int. Cl.[6]: **C08L 51/06**, C08L 71/12

(22) Date of filing: **23.12.94**

(30) Priority: **27.12.93 JP 331576/93**

(43) Date of publication of application:
**05.07.95 Bulletin 95/27**

(84) Designated Contracting States:
**BE DE FR GB IT NL**

(71) Applicant: **SUMITOMO CHEMICAL COMPANY, LIMITED**
**5-33, Kitahama 4-chome**
**Chuo-ku**
**Osaka (JP)**

(72) Inventor: **Fujii, Takeshi**
**2848-19, Kubota**
**Sodegaura-shi (JP)**
Inventor: **Suzuki, Yasuro**
**9-14, Hatazawaminami-5-chome**
**Kisarazu-shi (JP)**
Inventor: **Anbo, Takashi**
**9, Yushudainishi-1-chome**
**Ichihara-shi (JP)**
Inventor: **Saga, Yuji**
**9, Yushudainishi-1-chome**
**Ichihara-shi (JP)**

(74) Representative: **VOSSIUS & PARTNER**
**Siebertstrasse 4**
**D-81675 München (DE)**

(54) **Polyphenylene ether type thermoplastic resin composition having improved delamination resistance.**

(57) A polyphenylene ether type thermoplastic resin composition excellent in delamination resistance, which comprises:
95 to 5 parts by weight of a mixture of:
(A) 1 to 100 % by weight of a polyphenylene ether type resin and
(B) 0 to 99% by weight of an alkenyl aromatic type resin,
5 to 95 parts by weight of (C) a graft product in which an alkenyl aromatic compound and, if necessary, at least one other unsaturated monomer is grafted on an ethylene-α-olefin type copolymer rubber,
0 to 40 parts by weight of (D) an ethylene-α-olefin copolymer rubber, and
(E) a radical initiator in a proportion of 0.01 to 5 parts by weight per 100 parts by weight of a total of the components (A) to (D).

EP 0 661 344 A1

This invention relates to a polyphenylene ether type thermoplastic resin composition having excellent skin-layer-peeling (referred to hereinafter as delamination) strength, and to a process for producing the same.

A polyphenylene ether type resin is one of the engineering plastics having excellent properties including heat resistance and mechanical properties.

Said polyphenylene ether type resin is disclosed in many prior art references, for example, US-A-3,306,874; 3,306,875 and 3,573,257.

Although the polyphenylene ether type resin has the above-mentioned excellent properties, it has such disadvantages as inferior moldability and low impact resistance. In order to remedy these disadvantages, various methods have been proposed. For improving the moldability, a method is well-known in which a styrene homopolymer which is compatible with the polyphenylene ether type resin is blended with the polyphenylene ether resin, and for improving the impact resistance, a method is well-known that a rubber is blended with and dispersed in the polyphenylene ether resin. In particular, rubber-modified styrene copolymers are effective because they can improve the moldability and impact resistance simultaneously. Particularly, styrene-graft-copolymerized polybutadiene rubbers (referred to hereinafter as BR-HIPS) are generally used. For example, US-A-3,383,435 discloses polyphenylene ether type resin/BR-HIPS.

However, polybutadiene rubber (referred to hereinafter as BR) has unsaturations in the polymer main chain, and hence, is unstable against heat and light, and consequently, when BR-HIPS is blended with the polyphenylene ether resin, the resulting resin composition is practically unsatisfactory in heat stability, light stability and weather resistance.

Many proposals have been made for obtaining compositions having excellent impact resistance, heat stability, light stability and weather resistance by blending a styrene-graft-copolymerized EPDM (referred to hereinafter as EPDM-HIPS) with a polyphenylene ether type resin. They are disclosed in, for example, JP-B-47-43,174, JP-B-47-43,290, US-A-3,943,191, 3,959,211, 3,974,235, 4,127,558, 4,152,316, 4,101,505, 4,101,503 and 4,101,504 and JP-A-58-111,854.

A composition in which EPDM-HIPS and another impact modifier are added to a polyphenylene ether resin for further improving the impact resistance has been proposed. As said other impact modifier, an ethylene-propylene copolymer rubber (referred to hereinafter as EPM) is disclosed in, for example, in US-A-4,373,045.

Many proposals have been made for obtaining a composition having excellent impact resistance, heat stability, light stability and weather resistance by incorporating a styrene-grafted ethylene-$\alpha$-olefin copolymer rubber (referred to hereinafter as EPM-HIPS) together with other impact modifiers into a polyphenylene ether type resin. For example, JP-A-57-139,140 and JP-A-60-36,550 disclose BR-HIPS as said other impact modifiers and JP-A-59-140,257 discloses a hydrogenated styrene-butadienestyrene triblock copolymer or a combination thereof with BR-HIPS as said other impact modifiers.

A composition having excellent impact resistance, heat stability, light stability and weather resistance in which EPDM-HIPS is blended with a styrene-grafted polyphenylene ether type resin has been proposed, and this is disclosed in, for example, JP-B-53-39,698 and JP-B-55-44,026.

As mentioned above, a number of proposals have been made for a composition having excellent impact resistance and weather resistance; however, polyphenylene ether type resin composition whose impact resistance has been improved by a rubber component has such a disadvantage that when it is injection molded, the skin layer of the resulting molded article is easily peeled from the surface portion at which the article has been scratched (this peeling is referred to hereinafter as delamination). The delamination becomes a great problem in that the appearance and performance as a commercial product are remarkably impaired.

As mentioned above, many inventions relating to an improvement of the impact resistance of polyphenylene ether type resins have been disclosed; however, they have not referred to improvement in delamination resistance.

It is an object of the present invention to provide a polyphenylene ether type resin having good impact resistance and also improved delamination resistance. This object could be achieved on the basis of the finding that the delamination resistance can be greatly improved by blending a graft product in which an alkenyl aromatic compound and, if necessary, at least one unsaturated monomer other than the alkenyl aromatic compound are grafted on an ethylene-$\alpha$-olefin copolymer rubber as an impact modifier with a polyphenylene ether resin and further adding a radical initiator.

According to this invention, there is provided a delamination-improved polyphenylene ether type thermoplastic resin composition, which comprises: 95 to 5 parts by weight of a mixture of:

(A) 1 to 100% by weight of a polyphenylene ether type resin and

(B) 0 to 99% by weight of an alkenyl aromatic type resin,
5 to 95 parts by weight of (C) a graft product in which an alkenyl aromatic compound and, if necessary, at least one unsaturated monomer other than the alkenyl aromatic compound have been grafted on an ethylene-α-olefin type copolymer rubber,
0 to 40 parts by weight of (D) an ethylene-α-olefin type copolymer rubber, and
(E) a radical initiator in a proportion of 0.01 to 5 parts by weight per 100 parts by weight of the mixture of the above components (A) to (D).

This invention also provides a method for producing a delamination resistance-improved polyphenylene ether type thermoplastic resin composition, characterized in adding 0.01 to 5 parts by weight of the above component (E) to 100 parts by weight of the above mixture of the components (A) to (D) and subjecting them to reaction.

Moreover, this invention provides a method for producing a delamination resistance-improved polyphenylene ether type thermoplastic resin composition which comprises previously melt-kneading a part or the whole of the component (A), a part or the whole of the component (B), the component (C) and the component (D), adding, with melt-kneading, the component (E); the component (E) and a part of the component (A); the component (E) and a part of the component (B); or the component (E), a part of the component (A) and a part of the component (B), and then further melt-kneading them.

The polyphenylene ether type resin (A) used in this invention is a homopolymer consisting of the following recurring unit (I) or a copolymer consisting of the following recurring units (I) and (II):

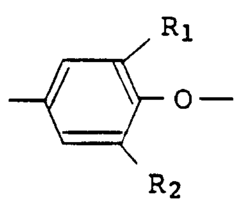

(I)

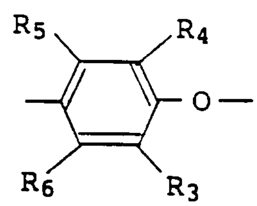

(II)

wherein $R_1$, $R_2$, $R_3$, $R_4$, $R_5$ and $R_6$ may be the same as or different from one another and each represents a monovalent residue such as an alkyl group having 1 to 4 carbon atoms excluding t-butyl group, an aryl group, a halogen atom or a hydrogen atom, provided that $R_3$ and $R_5$ must not be simultaneously hydrogen atoms.

The polyphenylene ether type resin may be a mixture of the homopolymer and the copolymer or a graft copolymer of an alkenyl aromatic compound on the above homopolymer or copolymer.

The polyphenylene ether type resin in the homopolymer form includes the following:
poly(2,6-dimethyl-1,4-phenylene) ether,
poly(2-methyl-6-ethyl-1,4-phenylene) ether,
poly(2,6-diethyl-1,4-phenylene) ether,
poly(2-ethyl-6-n-propyl-1,4-phenylene) ether,
poly(2,6-di-n-propyl-1,4-phenylene) ether,
poly(2-methyl-6-n-butyl-1,4-phenylene) ether,
poly(2-ethyl-6-isopropyl-1,4-phenylene) ether,
poly(2-methyl-6-chloro-1,4-phenylene) ether,
poly(2-methyl-6-hydroxyethyl-1,4-phenylene) ether, and
poly(2-methyl-6-chloroethyl-1,4-phenylene) ether.

The polyphenylene ether type resin in the copolymer form includes a class of polyphenylene ether copolymers each composed mainly of a polyphenylene ether structure and obtained by copolymerization of a monomer from which the above-enumerated homopolymers are derived with o-cresol or an alkyl-substituted phenol such as 2,3,6-trimethylphenol represented by the following formula (III):

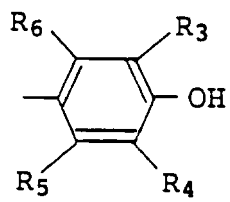

(III)

wherein $R_3$, $R_4$, $R_5$ and $R_6$ may be the same as or different from one another and each represents a monovalent residue such as an alkyl group having 1 to 4 carbon atoms excluding t-butyl group, an aryl group, a halogen atom or a hydrogen atom, provided that $R_3$ and $R_5$ must not be simultaneously hydrogen atoms. A preferable polyphenylene ether type resin is poly(2,6-dimethyl-1,4-phenylene) ether.

The alkenyl aromatic type resins (B) used in this invention are those well-known to those skilled in the art, and homopolymers or copolymers having a recurring unit represented by the following formula (IV) derived from an aromatic vinyl compound:

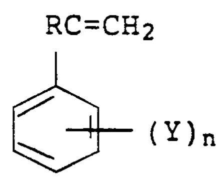

(IV)

wherein R is a hydrogen atom, a lower alkyl group or a halogen atom, Y is a hydrogen atom, a vinyl group, a halogen atom, an amino group, a hydroxyl group or a lower alkyl group, and n is 0 or an integer of 1 to 5.

The term "lower alkyl group" used herein means an alkyl group having 1 to 6 carbon atoms.

Examples of the alkenyl aromatic type resin include such homopolymers as polystyrene and polychlorostyrene ; polystyrenes modified with a natural or synthetic rubber such as polybutadiene, styrene-butadiene rubber, urethane rubber and natural rubber, excluding the following ethylene-α-olefin copolymer rubbers used in the component (C), copolymers of an alkenyl aromatic compound with at least one other unsaturated monomer copolymerizable therewith such as styrene-acrylonitrile copolymer, styrene-acrylic acid copolymer, styrene-maleic anhydride copolymer, styrene-methylmethacrylate copolymer, styrene-acrylate copolymer, styrene copolymers modified with the above-mentioned rubber, and a mixture thereof. The alkenyl aromatic resin may be mixed in any amount.

The graft product (C) used in this invention is obtained by graft-copolymerizing an alkenyl aromatic compound and, if necessary, at least one unsaturated monomer other than the alkenyl aromatic compound on an ethylene-α-olefin type copolymer rubber. When the amount of the ethylene-α-olefin type copolymer rubber in this graft copolymer is less than 10% by weight, the improving effect on impact resistance is small, and when it exceeds 90% by weight, the amount of the grafted alkenyl aromatic compound becomes too small and hence the compatibility with the polyphenylene ether type resin is low and the impact resistance is not improved. When the amount of said unsaturated monomer exceeds 0.23 time as the total amount of the alkenyl aromatic compound and said unsaturated monomer, the compatibility with the component (A) becomes inferior and the impact resistance is not improved.

The alkenyl aromatic compound used therein is a compound represented by the formula (VI) and can be used alone or in combination of two or more:

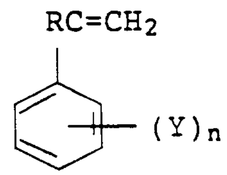

(VI)

wherein R is a hydrogen atom, a lower alkyl group or a halogen atom, Y is a hydrogen atom, a vinyl group, a halogen atom, an amino group, a hydroxyl group or a lower alkyl group, and n is 0 or an integer of 1 to 5.

Specific examples thereof include styrene, α-methylstyrene, α-chlorostyrene, vinyltoluene and divinylbenzene. Styrene is particularly preferred.

Said at least one unsaturated monomer other than the alkenyl aromatic compound is a compound copolymerizable with the alkenyl aromatic compound and includes those mentioned in, for example, "Kobunshi Data Handbook Kisohen", pages 444-459 (edited by the Society of Polymer Science, Japan, 1986, and published by Baifukan).

Said unsaturated monomer includes unsaturated monocarboxylic acids such as acrylic acid and methacrylic acid; alkyl ester derivatives of the above acids such as methyl (meth)acrylate, ethyl (meth)-acrylate and butyl (meth)acrylate; unsaturated dicarboxylic acids and anhydrides such as fumaric acid, maleic acid, maleic anhydride and itaconic acid;

derivatives of said unsaturated dicarboxylic acids and anhydrides such as mono- and diethyl-esters of maleic acid, N-phenylmaleimide and N,N'-metaphenylene bismaleimide; acrylamide; N-(hydroxymethyl)-acrylamide; glycidyl derivatives of (meth)acrylic acid such as glycidyl (meth)acrylate; vinyl acetate; and vinyl cyanide compounds such as acrylonitrile and methacrylonitrile. These may be used alone or in combination of two or more.

The ethylene-α-olefin type copolymer rubber used in the graft product (C) is preferably at least one member selected from the group consisting of ethylene-α-olefin copolymer rubbers having a crystallinity of less than 15% and ethylene-α-olefin-non-conjugated diene copolymer rubbers having a crystallinity of less than 15%.

The α-olefin content in the ethylene-α-olefin copolymer rubber is not critical when the crystallinity of the copolymer rubber is preferably less than 15%; however, the α-olefin content is usually 15 to 85% by weight. The Mooney viscosity at 121 °C is not critical. In view of impact resistance, however, the Mooney viscosity is preferably 40 or more, more preferably 50 or more. It is not desirable to use an ethylene-α-olefin copolymer rubber having so high a Mooney viscosity at 121 °C that the graft product cannot disperse satisfactorily. The Mooney viscosity at 121 °C is preferably 120 or less.

The α-olefin component includes mono-α-olefins such as propylene, butene-1 and pentene-1. The non-conjugated diene as the third component includes ethylidenenorbornene, dicyclopentadiene and 1,4-hexadiene.

Specific examples of the ethylene-α-olefin type copolymer rubber include ethylene-propylene copolymer rubber, ethylene-butene-1 copolymer rubber, ethylene-propylene-ethylidenenorbornene terpolymer rubber and ethylene-propylene-dicyclopentadiene terpolymer rubber.

Such ethylene-α-olefin copolymer rubbers can be prepared by the method disclosed in, for example, JP-B- 43-13,052, JP-A-2-77,410 and the like, that is to say, copolymerizing ethylene, an α-olefin and, if necessary, a non-conjugated diene as the third component with a Ziegler-Natta catalyst consisting of a vanadium compound, an organoaluminum compound and, if necessary, a halogenated ester compound in an inert organic solvent such as a hydrocarbon.

The above organoaluminum compound includes alkylaluminum sesquichlorides, trialkylaluminums, dialkylaluminum monochlorides and mixtures thereof. The vanadium compound includes vanadium oxytrichloride, vanadium tetrachloride and vanadate compounds represented by the formula $VO(OR_8)_qX_{3-q}$ in which $0 < q \leqq 3$, $R_8$ is a straight or branched chain or cyclic hydrocarbon having 1 to 10 carbon atoms.

The method of grafting an alkenyl aromatic compound and, if necessary, at least one unsaturated monomer other than the alkenyl aromatic compound on the ethylene-α-olefin copolymer rubber is not limited to the method specifically described herein and any known methods can be used. That is, an emulsion polymerization method, a bulk polymerization method (JP-B-42-662 and US-A-3,435,096), a solution polymerization method (US-A-3,538,190 and 3,538,191) and a suspension polymerization method (JP-B-49-10,831, JP-B-57-40,166 and JP-B-62-10,565) can be adopted. In the case of a non-conjugated

diene-free ethylene-α-olefin copolymer rubber, particularly preferable is a suspension polymerization method in which an alkenyl aromatic compound and, if necessary, at least one unsaturated monomer other than the alkenyl aromatic compound are graft-copolymerized on the copolymer rubber in the presence of any amount of a free radical initiator and a dispersing agent in aqueous suspension.

The dispersing agent includes, for example, polyvinyl alcohol, cellulose compounds, acrylic acid type compounds, inorganic salts and alkylene oxides.

The free radical initiator used in the preparation of the graft product (C) includes, for example, organic peroxides such as benzoyl peroxide, lauroyl peroxide, t-butyl peroxypivalate, t-butyl hydroperoxide and dicumyl peroxide; and azo compounds such as azobisisobutyronitrile and azobisdimethylvaleronitrile.

The graft product (C) thus prepared is composed of three components of (i) a graft copolymer in which the alkenyl aromatic compound and, if necessary, at least one unsaturated monomer other than the alkenyl aromatic compound are truly grafted on the ethylene-α-olefin copolymer rubber, (ii) a copolymer of the alkenyl aromatic compound with at least one unsaturated monomer other than the alkenyl aromatic compound, and (iii) the ungrafted ethylene-α-olefin copolymer rubber. The contents of the three components in the graft product (C) can be determined by, for example, a solvent fractionation method as shown in Examples which appear hereinafter or the like.

The ethylene-α-olefin copolymer rubber (D) includes those used as the base rubber in the graft product (C). The smaller the amount of the component (D), the better the delamination resistance.

The radical initiator (E) used in this invention may be any known one, and includes, for example, azo compounds such as 2,2-azobisisobutyronitrile and 2,2-azobis-(2,4,4)-trimethylvaleronitrile,

and various organic peroxides such as methyl ethyl ketone peroxide, cyclohexanone peroxide, 3,3,5-trimethylcyclohexanone peroxide, 2,2-bis(t-butylperoxy)butane, t-butyl hydroperoxide, cumene hydroperoxide, diisopropylbenzene hydroperoxide, 2,5-dimethylhexane-2,5-dihydroperoxide, di-t-butyl peroxide, 1,3-bis(t-butylperoxyisopropyl)benzene, 2,5-dimethyl-2,5-di(t-butylperoxy)hexane, 2,5-dimethyl-2,5-di(t-butylperoxy)hexine-3, lauroyl peroxide, 3,3,5-trimethylhexanoyl peroxide, benzoyl peroxide, t-butyl peracetate, t-butyl peroxyisobutyrate, t-butyl peroxypivalate, t-butyl peroxy-2-ethylhexanoate, t-butyl peroxy-3,5,5-trimethylhexanoate, t-butyl peroxylaurate, t-butyl peroxybenzoate, di-t-butyl peroxyisophthalate, 2,5-dimethyl-2,5-di(benzoylperoxy)hexane, t-butyl peroxymaleate, t-butyl peroxyisopropylcarbonate and polystyrene peroxide.

The thermoplastic resin composition of this invention comprises 95 to 5 parts by weight, preferably 93 to 7 parts by weight, of a mixture of (A) 1 to 100% by weight, preferably 10 to 90% by weight, of the polyphenylene ether type resin and (B) 99 to 0% by weight, preferably 90 to 10% by weight of the alkenyl aromatic type resin; (C) 5 to 95 parts by weight, preferably 7 to 93 parts by weight, of the graft product; (D) 0 to 40 parts by weight, preferably 2 to 35 parts by weight of the ethylene-α-olefin type copolymer rubber; and (E) a radical initiator in a proportion of 0.01 to 5 parts by weight, preferably 0.02 to 3 parts by weight, more preferably 0.1 to 2 parts by weight per 100 parts by weight of a total of the components (A) to (D). When the content of the polyphenylene ether type resin (A) in the mixture of the components (A) and (B) is less than 1% by weight, the heat resistance of the composition is not sufficient. When the amount of the graft product (C) is less than 5 parts by weight, the impact resistance of the composition is not sufficient and when the amount exceeds 95 parts by weight, the heat resistance and rigidity are not sufficient. When the amount of the ethylene-α-olefin type copolymer rubber (D) exceeds 40 parts by weight, the heat resistance and rigidity are not sufficient. When the amount of the radical initiator (E) is less than 0.01 part by weight, no improvement effect on delamination resistance can be obtained and when the amount exceeds 5 parts by weight the impact resistance is reduced.

This invention provides a process for producing a polyphenylene ether type thermoplastic resin composition having improved delamination resistance which comprises:

mixing 95 to 5 parts by weight of a mixture of (A) 1 to 100% by weight of a polyphenylene ether type resin and (B) 0 to 99% by weight of an alkenyl aromatic type resin,

5 to 95 parts by weight of (C) a graft product in which an alkenyl aromatic compound and, if necessary, at least one unsaturated monomer other than the alkenyl aromatic compound are graft-copolymerized on an ethylene-α-olefin type copolymer rubber and

0 to 40 parts by weight of (D) an ethylene-α-olefin type copolymer rubber to obtain a precursor mixture,

adding to the precursor mixture, (E) a radical initiator in a proportion of 0.01 to 5 parts by weight per 100 parts by weight of a total of the components (A) to (D) to obtain a precursor composition, and reacting the precursor composition to obtain a polyphenylene ether type thermoplastic resin composition.

This invention also provides a process for producing a polyphenylene ether type thermoplastic resin composition according to Claim 9, wherein a part or the whole of the component (A), a part or the whole of the component (B), the component (C) and the component (D) are previously melt-kneaded to obtain a

precursor mixture, and with melt-kneading, adding to the precursor mixture, the component (E); a part of the component (A) and the component (E); a part of the component (B) and the component (E); or a part of the component (A), a part of the component (B) and the component (E) to obtain a precursor composition and the precursor composition is further melt-kneaded to obtain a polyphenylene ether type thermoplastic resin composition.

In the production of the thermoplastic resin composition of this invention, various methods such as solution-blending or melt-kneading can be adopted; however, melt-kneading is preferred. The melt-kneading method comprises uniformly mixing the above components except the radical initiator by a mixing means for mixing resins with each other or a resin with a liquid or solid additive such as a Henschel mixer, a super mixer, a ribbon blender or a V blender, and thereafter melt-kneading the resulting mixture by a kneading means such as a Bunbury mixer, a plastomill, a Brabender Plastograph, a single or twin screw extruder

to produce the thermoplastic resin composition, thereafter, blending the radical initiator (E) with the composition and melt-kneading the mixture again by the same melt-kneading means as above to subject the mixture to reaction. Moreover, when the melt-kneading is conducted in an extruder having plural feed openings, at least one of the components may be fed successively along the cylinder; however, the radical initiator (E) is fed from the feed opening on the discharge side after the components (A) to (D) have been kneaded and melted and the whole mixture is subjected to further melt-kneading.

In carrying out this invention, to the thermoplastic resin of this invention can be added a natural or synthetic polymer which is an elastomer at room temperature other than the ethylene-$\alpha$-olefin copolymer rubber (D). There are used, for example, polybutadiene, styrene-butadiene copolymer rubber, styrene block copolymer rubbers such as at least two styrene-butadiene blocks-containing copolymer rubber, at least two styrene-isoprene blocks-containing copolymer rubber, hydrogenated at least two styrene-butadiene blocks-containing copolymer rubber, hydrogenated at least two styrene-isoprene blocks-containing copolymer rubber, polyurethane rubber and mixtures thereof. The rubbers modified with other acid or epoxy-containing functional monomers may be used.

In carrying out this invention, to the thermoplastic resin composition of this invention can be added a crystalline olefin polymer having a crystallinity of 15% or more. Specific examples of the crystalline olefin polymer include, for example, polymers of olefins per se such as polypropylene, high density polyethylene, low density polyethylene, straight chain low density polyethylene, propylene-ethylene copolymer, ethylene-butene-1 copolymer, ethylene-pentene copolymer, ethylene-hexene copolymer, and poly-4-methylpentene-1;

and copolymers of a major amount of an olefin with a vinyl monomer copolymerizable therewith (e.g., acrylic acid esters, methacrylic acid esters, vinyl acetate, styrene, acrylonitrile and glycidyl (meth)acrylate).

The copolymers may be either random copolymer, block copolymer or graft copolymer. The above crystalline olefin polymers may be used alone or even in admixture of two or more. Among the crystalline olefin polymers, preferred are polyethylene, polypropylene and propylene-ethylene random copolymer and propylene-ethylene block copolymer, and particularly preferable are polypropylene, propylene-ethylene random copolymer and propylene-ethylene block copolymer.

The above crystalline olefin polymers are prepared by a method known to those skilled in the art, for example, the method described in ENCYCLOPEDIA OF POLYMER SCIENCE AND TECHNOLOGY, Vol. 6, page 275 (1967) and Vol. 11, page 597 (1969) (John Wiley & sons, Inc.).

In carrying out this invention, to the thermoplastic resin composition can be added other high molecular weight compounds. Said other high molecular weight compounds include, for example, such polymers as polyvinyl chloride, polymethyl methacrylate, polyvinyl acetate, polyvinylpyrrolidone, polyvinylcarbazole, polyacrylamide and polyacrylonitrile; condensation type high molecular weight compounds such as polycarbonate, polysulfone, polyether sulfone, polyethylene terephthalate, polybutylene terephthalate, polyarylene ester (e.g., U Polymer manufactured by UNITIKA LTD.), polyphenylene sulfide, polyamides such as 6-nylon, 6,6-nylon and 12-nylon, polyacetal;

and various thermosetting resins such as silicone resin, fluoroplastics, polyimide, polyamideimide, phenol resin, alkyd resin, unsaturated polyester resin and Dabon resin.

Among the above other high molecular weight compounds, preferred are polyesters such as polycarbonate, polyethylene terephthalate, polybutylene terephthalate, and polyarylene ester and polyamides.

In order to obtain the thermoplastic resin composition in this invention, it is possible to incorporate a filler for the purpose of reinforcement, imparting a function, extension (cost down) and the like.

As the filler, there can be used fibers such as glass fiber, carbon fiber, polyamide fiber, fibers and whiskers of metals such as aluminum and stainless steel; and inorganic fillers such as silica, alumina, calcium carbonate, talc, mica, clay, kaolin, magnesium sulfate, wollastonite, carbon black, $TiO_2$, $ZnO$ and $Sb_2O_3$.

All the fillers can be used for reinforcement. Such fillers as carbon fiber, metal fiber and carbon black can reduce the surface resistivity and volume resistivity to impart electrical conductivity to the thermoplastic resin composition of this invention. If a filler is less expensive than the thermoplastic resin composition of this invention, it can be used as an extender to down the cost.

For the purpose of improving the rigidity and heat resistance of the thermoplastic resin composition of this invention, it is particularly preferable to use inorganic fillers such as glass fiber, potassium titanate whisker, talc, mica and calcium carbonate;

or carbon fiber as the filler.

In the thermoplastic resin composition of this invention, it is one of the preferable modes to add to the composition a flame retardant or flame-retarding coagent such as $Sb_2O_3$, a halogenated compound or a phosphoric acid ester ; a lubricant; a nucleating agent; a plasticizer such as triphenyl phosphate or phthalic acid ester, a dyestuff; a pigment; an antistatic agent; an antioxidant; a weathering agent; and use the resulting composition as a composite material.

This invention is explained in more detail below referring to Examples; however, this invention should not be construed to be limited thereto.

The method of analyzing the structure of each component and the method of evaluating the physical properties of the composition in the Examples are described below.

Method of analyzing the structure of ethylene-$\alpha$-olefin type copolymer rubber

(1) Propylene content and butene-1 content

A pressed sheet was prepared and subjected to infrared spectroscopic analysis, and the above contents were determined by a calibration curve method using the absorbance values of characteristic absorptions of ethyl ($-C_2H_5$), methyl ($-CH_3$) and methylene ($-CH_2-$) appearing in the infrared absorption spectra obtained.

(2) Iodine value

This was used as a method of determining the amount of conjugated diene. According to the method prescribed in JIS K3331, the amount (g) of iodine consumed per 100 g of polymer was determined.

(3) Mooney viscosity

Measured according to the method prescribed in JIS K6300. The measurement temperature was 121 °C.

(4) Crystallinity

Measured by the X-ray diffractometry reported in S.L. Aggarwal et al., Journal of Polymer Science, Vol. 18, pages 17-26 (1955).

Method of evaluating physical properties of composition

(1) Izod impact strength

Measured by the method prescribed in JIS K7110. The thickness of a test piece was 3.2 mm, and notch impact strength was evaluated. The measurement temperature was 23 °C.

(2) Heat deformation temperature (HDT)

Measured according to the method prescribed in JIS K7207. The fiber stress was measured at 18.6 $kg/cm^2$.

(3) Observation of delamination

An injection-molded automobile wheel cover was cut by a guillotine cutter in parallel to the direction of the flow of the injection molding and whether or not the skin layer was peeled at the cut section. When the skin layer was not peeled, the skin layer was somewhat peeled, and thereafter the peeled skin layer was

then drawn, to evaluate whether or not the peeling proceeded easily.

Method of evaluating intrinsic viscosity

Using a Ubbellohde viscometer, reduced viscosity was measured at three solution concentrations of 0.1, 0.2 and 0.5 g/dl. The intrinsic viscosity was determined by the calculation method described in "Kobunshi Yoeki, Kobunshi Jikkengaku 11" (published by Kyoritsu Shuppan K. K., Japan, 1982), page 491, that is, an extrapolation method by which reduced viscosity was plotted to concentration and the viscosity at a concentration of 0 was determined by extrapolation. Method of fractionation of graft product

A graft product obtained by graft polymerization in the Examples is composed of three components of (i) ungrafted styrene homopolymer, styrene-methyl methacrylate (MMA) or acrylonitrile (ACN) copolymer resin (referred to hereinafter as free-XS), (ii) ungrafted EPR (referred to hereinafter as free-EPR), and (iii) truly grafted styrene graft polymer or styrene-methyl methacrylate or acrylonitrile-EPR graft copolymer (referred to hereinafter as XS-g-EPR). These constituents were fractionated by the following method. Here, EPR refers to ethylene-α-olefin type copolymer rubber.

In a Laboplastomill Model R-100 manufactured by Toyo Seiki K. K., 80 g of graft product particles were kneaded at 220 °C at a rotor revolution rate of 80 rpm for four minutes and then cut to 5-mm square pieces. Five grams of the pieces were immersed in 300 ml of methyl ethyl ketone at a temperature of 80 °C to 83 °C for four hours to extract the free-XS. The extraction residue was dried and then cut to 2-mm square pieces and 3 g of the pieces were immersed in 200 ml of hexane at room temperature for a period of 40 to 48 hours to extract the free-EPR. The amounts of the free-XS, the free-EPR and the XS-g-EPR were determined by the above-mentioned method. Also, the intrinsic viscosity of the free-XS was determined at 30 °C in toluene.

Method of analyzing composition of graft product

A 0.8% by weight solution of a sample in chloroform ($CDCl_3$) as a solvent was prepared and subjected to measurement of proton nuclear magnetic resonance (NMR) spectrum at 35 °C at 250 MHz.

Composition analysis was made by calculation from peak intensity of NMR using absorptions of phenyl proton of styrene, R proton of -O-R of alkyl methacrylate and proton of -CH-CN of acrylonitrile.

Reference Example 1 (Graft product I)

In a 100-liter autoclave equipped with a stirrer were placed 44 liters of pure water in which 50 g of Pluronic F68 manufactured by ASAHI DENKA KOGYO K. K. had been dissolved as a dispersing agent and 2.5 kg of ethylene-propylene-ethylidenenorbornene terpolymer rubber having a propylene content of 44% by weight, a Mooney viscosity of 63 and a crystallinity of 0% [Esprene E-502 (a tradename of Sumitomo Chemical Co., Ltd.)] which had been cut to 3-mm to 6-mm square pieces, and the ethylene-propylene-ethylidenenorbornene terpolymer rubber was suspended in the pure water by stirring. Subsequently, to the suspension were added styrene and methyl methacrylate in the amounts shown in Table 1, and 3 parts by weight of t-butyl peroxypivalate as a polymerization initiator and 0.06 part by weight of p-benzoquinone as a polymerization inhibitor were added per 100 parts by weight of a total of the monomers, after which the temperature was elevated at a rate of about 1 °C per minute from room temperature to 110 °C and then kept at 110 °C for 30 minutes, to conduct the first stage polymerization. After the polymerization, the mixture was cooled to room temperature, and thereafter, the monomers were added in the amounts shown in Table 1, and 3 parts by weight of the initiator and 0.06 part by weight of the polymerization inhibitor were then added per 100 parts by weight of the monomers, after which the resulting mixture was subjected to temperature elevation in the same manner as in the first stage to conduct the second stage polymerization. The graft products obtained are referred to hereinafter as G-EPDM-1 and G-EPDM-2, respectively, provided that in the G-EPDM-1, α-methylstyrene dimer was added as a chain transfer agent in a proportion of 0.5 part by weight per 100 parts by weight of the rubber.

The particulate graft product produced was washed with water and then dried, and the rubber contents in the graft product particles obtained was determined from the recovery (Table 1).

Reference Example 2 (Graft product II)

Graft polymerization was effected only in the first stage in the same manner as in Reference Example 1, except that styrene and methyl methacrylate were added in the amounts shown in Table 2 and the second stage polymerization was not effected. The graft products obtained are referred to hereinafter as G-EPDM-3, G-EPDM-4 and G-EPDM-5. The rubber contents in the graft products obtained are shown in Table

2.

Reference Example 3 (Graft product III)

Graft polymerization was effected in the same manner as in Reference Example 1, except that styrene and acrylonitrile were added as the monomers in the amounts shown in Table 3. The graft product obtained is referred to hereinafter as G-EPDM-6. The rubber content in the graft product is shown in Table 3.

Reference Example 4 (Graft product IV)

An ethylene-propylene copolymer rubber having a propylene content of 50.4% by weight, a Mooney viscosity of 64 and a crystallinity of 0% (referred to hereinafter as EPM) and an ethylene-butene-1 copolymer rubber having a butene content of 17.5% by weight, a Mooney viscosity of 52 and a crystallinity of 12% (referred to hereinafter as EBM) were blended at a blending ratio of EPM/EBM = 50/50 or 30/70 by a Bunbury mixer to obtain blend rubbers which are referred to hereinafter as EBP-1 and EBP-2, respectively.

Graft polymerization was effected in the same manner as in Reference Example 1, except that EPM, EBP-1, EBP-2 and EBM were used as the base rubbers with the recipe shown in Table 4. The graft products obtained are referred to hereinafter as G-EPM-1, G-EBP-1, G-EBP-2 and G-EBM-1, respectively. The rubber contents in the graft products are shown in Table 4. Analysis of composition of graft product

The results of a solvent extraction analysis and analysis of the structure of the graft product measured by NMR are shown in Table 5.

Table 1

| Ref. No. | Graft product | Feed ratio (parts by weight) | | | Rubber content in graft product (wt. %) |
|---|---|---|---|---|---|
| | | E502 | 1st stage ST/MMA | 2nd stage ST/MMA | |
| Ref. Ex. 1 | G-EPDM-1 | 100 | 84/16 | 112/21 | 34.8 |
| | G-EPDM-2 | 100 | 133/0 | 100/0 | 34.5 |
| Note: ST means styrene. | | | | | |

Table 2

| Ref. No. | Graft product | Feed ratio (parts by weight) | | Rubber content in graft product (wt. %) |
|---|---|---|---|---|
| | | E502 | 1st stage ST/MMA | |
| Ref. Ex. 2 | G-EPDM-3 | 100 | 40/0 | 71.6 |
| | G-EPDM-4 | 100 | 100/0 | 55.4 |
| | G-EPDM-5 | 100 | 36/7 | 70.3 |
| Note: ST means styrene. | | | | |

Table 3

| Ref. No. | Graft product | Feed ratio (parts by weight) | | | Rubber content in graft product (wt. %) |
|---|---|---|---|---|---|
| | | E502 1st stage ST/ACN | | 2nd stage ST/ACN | |
| Ref. Ex. 3 | G-EPDM-6 | 100 | 95/5 | 123.3/6.5 | 32.9 |
| Note: ST means styrene. | | | | | |

Table 4

| Ref. No. | Graft product | Feed ratio (parts by weight) | | | | Rubber content in graft product (wt. %) |
|---|---|---|---|---|---|---|
| | | E502 1st stage ST/MMA | | | 2nd stage ST/MMA | |
| Ref. Ex. 4 | G-EPM-1 | EPM | 100 | 84/16 | 112/21.3 | 35.6 |
| | G-EBP-1 | EBP-1 | 100 | 84/16 | 112/21.3 | 34.5 |
| | G-EBP-2 | EBP-2 | 100 | 84/16 | 112/21.3 | 34.8 |
| | G-EBM-1 | EBM | 100 | 84/16 | 112/21.3 | 36.4 |
| Note: ST means styrene. | | | | | | |

Table 5

| Graft product | Constituents (wt. %) by Solvent Extraction Analysis | | | [η]XS (g/dl) | X/(X+ST) by NMR (wt. %) |
|---|---|---|---|---|---|
| | free-XS | free-EPR | XS-g-EPR | | |
| G-EPDM-1 | 46.9 | 7.1 | 46.0 | 0.36 | 16.3 |
| G-EPDM-2 | 42.9 | 12.6 | 44.5 | 0.47 | - |
| G-EPDM-3 | 7.8 | 44.0 | 48.3 | 0.32 | - |
| G-EPDM-4 | 25.4 | 26.5 | 48.1 | 0.40 | - |
| G-EPDM-5 | 5.5 | 40.4 | 54.2 | 0.37 | 16.2 |
| G-EPDM-6 | 48.6 | 13.6 | 37.6 | 0.49 | 5.0 |
| G-EPM-1 | 41.5 | 11.9 | 46.6 | 0.46 | 16.1 |
| G-EBP-1 | 42.7 | 11.3 | 46.0 | 0.46 | 16.2 |
| G-EBP-2 | 43.2 | 10.6 | 46.2 | 0.45 | 16.0 |
| G-EBM-1 | 44.3 | 10.2 | 45.5 | 0.47 | 16.3 |
| Note: ST means styrene. | | | | | |

Example 1

A poly(2,6-dimethyl-1,4-phenylene) ether (referred to hereinafter as PPE) having an intrinsic viscosity of 0.46 dl/g as measured at 30 °C in chloroform (H46 manufactured by Nihon Polyether K. K.), a polystyrene (referred to hereinafter as PS) (El83N manufactured by Sumitomo Chemical Co., Ltd.) and a graft product were blended in the proportions shown in Table 6 and the resulting blend was fed from the first feed opening of a twin screw kneader (TEX-44 manufactured by JAPAN STEEL WORKS, LTD.), and a blend of PPE and 1,3-bis(t-butylperoxyisopropyl)benzene as a radical initiator supported on calcium carbonate (40% product) (Parkadox 14/40C manufactured by Kayaku Noury Co., Ltd. and referred to hereinafter as PO) in the proportions shown in Table 6 was fed from the second feed opening provided between the dies and the first feed opening of the kneader. Melt-kneading was conducted at a cylinder temperature of 260 °C at a revolution rate of 300 rpm to obtain a thermoplastic resin composition. The composition thus obtained was

injection molded by an injection machine (IS 650E-54A manufactured by Toshiba Machine Co., Ltd.) equipped with a wheel cover mold designed by Sumitomo Chemical Co., Ltd. at a cylinder temperature of 280 °C at a mold temperature of 80 °C, and the wheel cover molding obtained was cut and the cut section was observed to evaluate whether or not the skin layer was peeled. General physical properties were evaluated on a test piece obtained by injection molding at a cylinder temperature of 260 °C at a mold temperature od 50 °C using an injection machine (IS 150E manufactured by Toshiba Machine co., Ltd.).

The results of evaluation of delamination and physical properties are shown in Table 6.

Comparative Example 1

In the same manner as in Example 2, except that no radical initiator was added, kneading, molding and evaluation were effected. The blending ratio and the results of evaluation of delamination and physical properties are shown in Table 6.

Example 2

In the same manner as in Example 1, except that the mixture fed from the second feed opening in Example 1 was previously blended with the mixture fed from the first feed opening in Example 1 and the resulting blend was fed from the first opening and kneaded, molding and evaluation were effected. The blending ratio and the results of evaluation of delamination and physical properties are shown in Table 6.

Table 6

| No. | Blending ratio (parts by weight) | | | | | | Delamination resistance improving effect | Physical properties | |
|---|---|---|---|---|---|---|---|---|---|
| | 1st feed opening | | | | 2nd feed opening | | | | |
| | PPE | G-EPDM-1 | PS | PO | PPE | PO | | Izod 23°C (kg·cm/cm) | HDT (°C) |
| Example 1 | 22 | 37.4 | 30.6 | - | 10 | 0.7 | Large | 20.3 | 108 |
| Example 2 | 32 | 37.4 | 30.6 | 0.7 | - | - | Middle | 28.7 | 108 |
| Comp. Ex. 1 | 32 | 37.4 | 30.6 | - | - | - | None | 30.6 | 109 |

Example 3

In the same manner as in Comparative Example 2, the first kneading was conducted without adding the radical initiator, and to 100 parts by weight of the resulting composition was added 0.7 part by weight of PO

and the resulting mixture was subjected to the second kneading under the same conditions to obtain a thermoplastic resin composition. Molding and evaluation were conducted in the same manner as in Example 1.

Blending ratio and the results of evaluation of delamination and physical properties are shown in Table 7.

Comparative Example 2

In the same manner as in Example 3, except that no radical initiator was added, kneading, molding and evaluation were conducted. Blending ratio and the results of evaluation of delamination and physical properties are shown in Table 7.

Table 7

| No. | Blending ratio (parts by weight) | | | | Delamination resistance improving effect | Physical properties | |
|---|---|---|---|---|---|---|---|
| | 1st kneading | | | 2nd kneading | | Izod 23°C (kg·cm/cm) | HDT (°C) |
| | PPE | G-EPDM-1 | PS | PO | | | |
| Example 3 | 32 | 37.4 | 30.6 | 0.7 | Large | 23.6 | 110 |
| Comp. Ex. 2 | 32 | 37.4 | 30.6 | - | None | 28.9 | 109 |

Examples 4 to 8

In the same manner as in Example 1, except that G-EPDM-2, G-EPDM-3, G-EPDM-4, G-EPDM-5 and G-EPDM-6 were used as the graft products and the blending ratios shown in Table 8 were used, kneading,

molding and evaluation were effected.

The results of evaluation of delamination and physical properties are shown in Table 8.

Comparative Examples 3 to 7

In the same manner as in Comparative Example 1, except that PO was not used and the blending ratios shown in Table 8 were used, kneading, molding and evaluation were effected.

The results of evaluation of delamination and physical properties are shown in Table 8.

Table 8

| No. | Blending ratio (parts by weight) | | | | | | Delamination resistance improving effect | Physical properties | |
|---|---|---|---|---|---|---|---|---|---|
| | 1st feed opening | | | | 2nd feed opening | | | | |
| | PPE | G-EPDM | | PS | PPE | PO | | Izod 23°C (kg·cm/cm) | HDT (°C) |
| Example 4 | 24.8 | G-EPDM-2 | 37.7 | 27.5 | 10 | 0.7 | Large | 10.2 | 112 |
| Example 5 | 20 | G-EPDM-3 | 18.2 | 51.8 | 10 | 0.7 | Large | 18.4 | 110 |
| Example 6 | 24.8 | G-EPDM-4 | 23.5 | 41.7 | 10 | 0.7 | Large | 34.1 | 112 |
| Example 7 | 20 | G-EPDM-5 | 18.5 | 51.5 | 10 | 0.7 | Large | 20.3 | 108 |
| Example 8 | 20 | G-EPDM-6 | 38.8 | 31.2 | 10 | 0.7 | Large | 15.0 | 108 |
| Comp. Ex. 3 | 34.8 | G-EPDM-2 | 37.7 | 27.5 | - | - | None | 16.3 | 114 |
| Comp. Ex. 4 | 30 | G-EPDM-3 | 18.2 | 51.8 | - | - | None | 26.0 | 108 |
| Comp. Ex. 5 | 34.8 | G-EPDM-4 | 23.5 | 41.7 | - | - | None | 40.5 | 113 |
| Comp. Ex. 6 | 30 | G-EPDM-5 | 18.5 | 51.5 | - | - | None | 26.4 | 108 |
| Comp. Ex. 7 | 30 | G-EPDM-6 | 38.8 | 31.2 | - | - | None | 20.0 | 107 |

Examples 9 to 12

In the same manner as in Example 1, except that G-EPM-1, G-EBP-1, G-EBP-2 and G-EBM-1 were used as the graft products and the blending ratios shown in Table 9 were used, kneading, molding and evaluation were effected.

The results of evaluation of delamination and physical properties are shown in Table 9.

Comparative Examples 8 to 11

In the same manner as in Example 9, except that no radical initiator was added and the blending ratios shown in Table 9 were used, kneading, molding and evaluation were effected.

The results of evaluation of delamination and physical properties are shown in Table 9.

Table 9

| No. | Blending ratio (parts by weight) | | | | | | Delamination resistance improving effect | Physical properties | |
|---|---|---|---|---|---|---|---|---|---|
| | 1st feed opening | | | | 2nd feed opening | | | | |
| | PPE | GRAFT PRODUCT | | PS | PPE | PO | | Izod 23°C (kg·cm/cm) | HDT (°C) |
| Example 9 | 24.8 | G-EPM-1 | 36.5 | 28.7 | 10 | 0.7 | Large | 23.5 | 113 |
| Example 10 | 24.8 | G-EBP-1 | 37.7 | 27.5 | 10 | 0.7 | Large | 23.5 | 113 |
| Example 11 | 24.8 | G-EBP-2 | 37.4 | 27.8 | 10 | 0.7 | Large | 22.6 | 114 |
| Example 12 | 24.8 | G-EBM-1 | 35.7 | 29.5 | 10 | 0.7 | Large | 22.4 | 114 |
| Comp. Ex. 8 | 34.8 | G-EPM-1 | 36.5 | 28.7 | - | - | None | 33.7 | 115 |
| Comp. Ex. 9 | 34.8 | G-EBP-1 | 37.7 | 27.5 | - | - | None | 33.5 | 115 |
| Comp. Ex. 10 | 34.8 | G-EBP-2 | 37.4 | 27.8 | - | - | None | 36.1 | 116 |
| Comp. Ex. 11 | 34.8 | G-EBM-1 | 35.7 | 29.5 | - | - | None | 34.8 | 116 |

Example 13

In the same manner as in Example 1, except that the blending ratio shown in Table 10 was used, kneading, molding and evaluation were effected. The results of evaluation of delamination and physical

properties are shown in Table 10.

Comparative Example 12

In the same manner as in Comparative Example 1, except that the blending ratio shown in Table 10 was used, kneading, molding and evaluation were effected.

The results of evaluation of delamination and physical properties are shown in Table 10.

Table 10

| No. | Blending ratio (parts by weight) | | | | Delamination resistance improving effect | Physical properties | |
|---|---|---|---|---|---|---|---|
| | 1st feed opening | | 2nd feed opening | | | Izod 23°C (kg·cm/cm) | HDT (°C) |
| | PPE | G-EPDM-1 | PPE | PO | | | |
| Example 13 | 60 | 30 | 10 | 0.7 | Large | 20.0 | 155 |
| Comp. Ex. 12 | 70 | 30 | - | - | None | 28.4 | 154 |

Example 14

In the same manner as in Example 1, except that G-EPDM-4 was fractionated and only the extracted graft copolymer (ST-g-EPR) was blended at the blending ratio shown in Table 11, kneading, molding and

evaluation were effected. The results of evaluation of delamination and physical properties are shown in Table 11.

Table 11

| No. | Blending ratio (parts by weight) | | | | Delamination resistance improving effect | Physical properties | |
|---|---|---|---|---|---|---|---|
| | 1st feed opening | | 2nd feed opening | | | | |
| | PPE | ST-g-EPR | PPE | PO | | Izod 23 °C (kg•cm/cm) | HDT (°C) |
| Ex. 14 | 78.3 | 21.7 | 10 | 0.7 | Large | 45.2 | 165 |

Example 15

In the same manner as in Example 1, except that a part of G-EPDM-1 was replaced with Esprene E502 (EPDM) and the blending ratios shown in Table 11 were used, kneading, molding and evaluation were effected.

The results of evaluation of delamination and physical properties are shown in Table 12.

Comparative Example 13

In the same manner as in Example 15, except that PO was not used, kneading, molding and evaluation were effected.

The results of evaluation of delamination and physical properties are shown in Table 12.

Table 12

| No. | Blending ratio (parts by weight) | | | | | Delamination resistance improving effect | Physical properties | |
|---|---|---|---|---|---|---|---|---|
| | 1st feed opening | | | | | | Izod 23°C (kg·cm/cm) | HDT (°C) |
| | PPE | G-EPDM-1 | PS | EPDM | PO | | | |
| Example 15 | 32 | 20.1 | 41.9 | 6 | 0.7 | Middle | 14.1 | 108 |
| Comp. Ex. 13 | 32 | 20.1 | 41.9 | 6 | - | None | 15.2 | 108 |

## Claims

**1.** A polyphenylene ether type thermoplastic resin composition having improved delamination resistance which comprises:

95 to 5 parts by weight of a mixture of

(A) 1 to 100% by weight of a polyphenylene ether type resin and

(B) 0 to 99% by weight of an alkenyl aromatic type resin,

5 to 95 parts by weight of (C) a graft product in which an alkenyl aromatic compound and, if necessary, at least one unsaturated monomer other than the alkenyl aromatic compound are graft copolymerized on an ethylene-α-olefin type copolymer rubber,

0 to 40 parts by weight of (D) an ethylene-α-olefin type copolymer rubber, and

(E) a radical initiator in a proportion of 0.01 to 5 parts by weight per 100 parts by weight of a total of the components (A) to (D).

**2.** The polyphenylene ether type thermoplastic resin composition, wherein the polyphenylene ether type resin (A) is poly(2,6-dimethyl-1.4-phenylene) ether.

**3.** The polyphenylene ether type thermoplastic resin composition according to Claim 1 or 2, wherein the alkenyl aromatic type resin (B) is at least one member selected from styrene-alkyl (meth)acrylate copolymers having a styrene content of at least 78% by weight, styrene-acrylonitrile copolymers having a styrene content of at least 78% by weight, polystyrene, a polybutadiene-modified polystyrene and a styrene-butadiene rubber-modified polystyrene.

**4.** The polyphenylene ether type thermoplastic resin composition according to any one of Claims 1 to 3, wherein in the graft product (C), the alkenyl aromatic compound is styrene; the at least one unsaturated monomer other than the alkenyl aromatic compound is selected from

alkyl (meth)acrylates and acrylonitrile; and the ethylene-α-olefin type copolymer rubber is at least one member selected from ethylene-α-olefin copolymer rubbers having a crystallinity of less than 15% and ethylene-α-olefin-non-conjugated diene copolymer rubbers having a crystallinity of less than 15%.

**5.** The polyphenylene ether type thermoplastic resin composition according to any one of Claims 1 to 4, wherein the ethylene-α-olefin type copolymer rubber (D) is at least one member selected from ethylene-α-olefin copolymer rubbers having a crystallinity of less than 15% and ethylene-α-olefin-non-conjugated diene copolymer rubbers having a crystallinity of less than 15%.

**6.** The polyphenylene ether type thermoplastic resin composition according to any one of Claims 1 to 5, wherein the radical initiator (E) is an azo compound or an organic peroxide.

**7.** The polyphenylene ether type thermoplastic resin composition according to Claim 6, wherein the organic peroxide is 1,3-bis(t-butylperoxyisopropyl)benzene.

**8.** A process for producing a polyphenylene ether type thermoplastic resin composition having improved delamination resistance according to any one of claims 1 to 7 which comprises: mixing 95 to 5 parts by weight of a mixture of (A) 1 to 100% by weight of a polyphenylene ether type resin and (B) 0 to 99% by weight of an alkenyl aromatic type resin,

5 to 95 parts by weight of (C) a graft product in which an alkenyl aromatic compound and, if necessary, at least one unsaturated monomer other than the alkenyl aromatic compound are graft-copolymerized on an ethylene-α-olefin type copolymer rubber and

0 to 40 parts by weight of (D) an ethylene-α-olefin type copolymer rubber to obtain a precursor mixture, adding to the precursor mixture, (E) a radical initiator in a proportion of 0.01 to 5 parts by weight per 100 parts by weight of a total of the components (A) to (D) to obtain a precursor composition, and

reacting the precursor composition to obtain a polyphenylene ether type thermoplastic resin composition.

**9.** The process for producing a polyphenylene ether type thermoplastic resin composition according to Claim 8, wherein a part or the whole of the component (A), a part or the whole of the component (B), the component (C) and the component (D) are previously melt-kneaded to obtain a precursor mixture, and with melt-kneading, adding, to the precursor mixture, the component (E); a part of the component (A) and the component (E); a part of the component (B) and the component (E); or a part of the component (A), a part of the component (B) and the component (E) to obtain a precursor composition and the precursor composition is further melt-kneaded to obtain a polyphenylene ether type thermoplastic resin composition.

**10.** A polyphenylene ether type thermoplastic resin composition having improved delamination resistance which comprises a reaction product of:
100 parts by weight of a mixture consisting of:
(a) 95 to 5 parts by weight of a component selected from :
(i) a polyphenylene ether type resin (A), and
(ii) a combination of said polyphenylene ether type resin (A) and an alkenyl aromatic type resin (B), and
(b) 5 to 95 parts by weight of a component selected from:
(i) a graft product (C) in which an alkenyl aromatic compound and, if necessary, at least one unsaturated monomer other than the alkenyl aromatic compound are graft copolymerized on an ethylene-α-olefin type copolymer rubber, and
(ii) a combination of said graft product (C) and an ethylene-α-olefin type copolymer rubber (D), and 0.01 to 5 parts by weight of a radical initiator (E).

**11.** The polyphenylene ether type thermoplastic resin composition according to Claim 10, wherein the component (a) is the combination (ii), and the content of the alkenyl aromatic type resin (B) in the combination (ii) is 99% by weight or less.

**12.** The polyphenylene ether type thermoplastic resin composition according to Claim 10, wherein the component (b) is the combination (ii), and the content of the ethylene-α-olefin type copolymer rubber (D) is 40 parts by weight or less per 100 parts by weight of the mixture of (a) and (b).

**13.** A process for producing a polyphenylene ether type thermoplastic resin composition having improved delamination resistance which comprises the steps of:
(1) mixing
(a) 95 to 5 parts by weight of a component selected from:
(i) a polyphenylene ether type resin (A), and
(ii) a combination of said polyphenylene ether type resin (A) and an alkenyl aromatic type resin (B),
(b) 5 to 95 parts by weight of a component selected from:
(i) a graft product (C) in which an alkenyl aromatic compound and, if necessary, at least one unsaturated monomer other than the alkenyl aromatic compound are graft copolymerized on an ethylene-α-olefin type copolymer ruber, and
(ii) a combination of said graft product (C) and an ethylene-α-olefin type copolymer rubber (D), and a radical initiator (E) in a proportion of 0.01 to 5 parts by weight per 100 parts by weight of the sum of components (A), (B), (C) and (D) to obtain a precursor composition, and
(2) allowing the precursor composition to react.

**14.** The process according to Claim 13, wherein step (1) includes the steps of:
admixing components (a) and (b) to obtain a mixture, and adding, to the mixture, the radical initiator (E).

**15.** The process according to Claim 14, wherein the step of admixing components (a) and (b) includes the step of keeping part of at least one component selected from the group consisting of the polyphenylene ether type resin (A) and the alkenyl aromatic type resin (B) unmixed before admixing components (a) and (b), and the step of adding the radical initiator (E) includes the step of adding to the mixture obtained in the step of admixing components (a) and (b) said part of at least one component kept unmixed together with the radical initiator (E).

**16.** The process according to any one of Claims 13 to 15, wherein step (1) and/or step (2) is carried out by melt-kneading.

European Patent Office

# EUROPEAN SEARCH REPORT

Application Number
EP 94 12 0578

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 12 no. 496 (C-555) ,23 December 1988 & JP-A-63 205350 (JAPAN SYNTHETIC RUBBER CO. LTD) 24 August 1988, * abstract * | 1,3-16 | C08L51/06<br>C08L71/12 |
| A | EP-A-0 352 057 (SUMITOMO CHEMICAL CO.) * claims 1,6,8; examples 20-23 * | 1-16 | |
| A | GB-A-2 172 892 (MATSUSHITA ELECTRIC WORKS LTD) * claims 31,35; examples * | 1-16 | |
| A | EP-A-0 475 157 (BASF AG. ) * page 2, line 33 - line 36; claims * | 1-16 | |

TECHNICAL FIELDS SEARCHED (Int.Cl.6)

C08L
C08K

The present search report has been drawn up for all claims

| Place of search | Date of completion of the search | Examiner |
|---|---|---|
| THE HAGUE | 13 April 1995 | Loiselet-Taisne, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)